# EUROPÄISCHE PATENTANMELDUNG

(11) **EP 4 279 405 A1**
(43) Veröffentlichungstag der Anmeldung: **22.11.2023**
(21) Anmeldenummer: 23158380.8
(22) Anmeldetag: 24.02.2023
(51) Int. Cl.: B65B 69/00

(54) **VORRICHTUNG, SET, PHARMAZEUTISCHE ANLAGE UND VERFAHREN ZUM ENTPACKEN EINER VIELZAHL VON GEGENSTÄNDEN**

(30) Priorität: 26.04.2022 DE 102022110051
(71) Anmelder: Syntegon Technology GmbH, 71332 Waiblingen (DE)
(72) Erfinder: Ilgenfritz, Markus, 91555 Feuchtwangen (DE); Krauß, Ulrich, 74532 Ilshofen (DE); Nagler, Stefan, 73485 Unterschneidheim (DE); Schmidl, Florian, 91550 Dinkelsbühl (DE)
(74) Vertreter: DREISS Patentanwälte PartG mbB

(57) **Zusammenfassung**

Die Erfindung betrifft eine Vorrichtung (10) und ein Verfahren zum Entpacken einer Vielzahl von, insbesondere vorsterilisierten, Gegenständen (12), die in einer länglichen Verpackung (14) mit einem oberen Ende (16) und einem unteren Ende (18) in einem länglichen Stapel aufeinandergestapelt angeordnet sind. Die Erfindung betrifft des Weiteren ein Set umfassend eine solche Vorrichtung (10) und mindestens eine Verpackung (14). Die Erfindung betrifft zudem eine pharmazeutische Anlage (44) mit mindestens einer solchen Vorrichtung (10) oder mit mindestens einem derartigen Set.

## Beschreibung

Die Erfindung betrifft eine Vorrichtung zum Entpacken einer Vielzahl von, insbesondere vorsterilisierten, Gegenständen mit Merkmalen des Anspruchs 1, ein Set mit Merkmalen des Anspruchs 8, eine pharmazeutische Anlage mit Merkmalen des Anspruchs 10 und ein Verfahren zum Entpacken einer Vielzahl von, insbesondere vorsterilisierten, Gegenständen mit Merkmalen des Anspruchs 12.

Beim mikrobiologischen Monitoring in z.B. einer pharmazeutischen Produktionsmaschine kommen häufig Petrischalen und/oder Abklatschproben zum Einsatz. Dabei handelt es sich um mit Nährmedium (Agar) gefüllte Kunststoffschalen mit einem Deckel. Petrischalen dienen dem Monitoring der Luft und Abklatschproben werden für das Monitoring von Oberflächen verwendet. Petrischalen und Abklatschproben sind jeweils meist in 10er-Stapeln aufeinander gestapelt dreifach steril, also in drei Folienschlauchbeuteln eingepackt. Die beiden äußeren Beutel werden beim Einschleusen der Petrischalen oder Abklatschproben vom unkontrollierten Raum in die pharmazeutische Produktionsmaschine schrittweise entfernt.

Vor Produktionsbeginn wird der innerste Beutel bspw. mit einer Schere manuell von einer Bedienperson, welche über Handschuheingriffe in die Produktionsmaschine eingreift, aufgeschnitten. Die Petrischalen bzw. Abklatschproben können dann ebenfalls manuell entnommen und z.B. in ein Vorratsmagazin gelegt werden. Dort verbleiben sie so lange, bis sie für das Monitoring benötigt werden.

Vor dem (manuellen) Öffnen des innersten Beutels wird dieser in einem Dekontaminationsprozess innerhalb der Produktionsmaschine dekontaminiert, so dass dieser keimfrei ist.

Eine andere Möglichkeit besteht darin, dass der Beutel mit den Petrischalen bzw. Abklatschproben in einem separaten Isolator (zusätzlicher Isolator zur pharmazeutischen Produktionsmaschine) über Handschuheingriffe im Isolator manuell geöffnet wird. Anschließend können die Petrischalen bzw. Abklatschproben manuell in ein Magazin einsortiert werden, welches dann über einen sterilen beta-Container oder über eine Verbindungstür in die eigentliche Produktionsmaschine eingeschleust wird. Das Magazin kann von einer Handhabungseinrichtung aus dem Container entnommen werden und in der pharmazeutischen Produktionsmaschine platziert werden.

Auch hier wird der innerste Beutel vor dem (manuellen) Öffnen in einem Dekontaminationsprozess innerhalb des separaten Isolators dekontaminiert, so dass dieser keimfrei ist.

Nachteilig dabei ist, dass zum Öffnen des Beutels mit den Petrischalen bzw. Abklatschproben in der Produktionsmaschine ein Handschuheingriff zum manuellen Entpacken oder zusätzlich zu der Produktionsmaschine ein separater Isolator mit Handschuheingriffen notwendig ist.

Es ist daher Aufgabe der Erfindung, eine Vorrichtung, ein Set, eine pharmazeutische Anlage und ein Verfahren bereitzustellen, wobei die obigen Nachteile ausgeräumt werden und insbesondere ein automatisiertes Entpacken der Petrischalen bzw. Abklatschproben ermöglicht wird.

Diese Aufgabe wird durch eine Vorrichtung zum Entpacken einer Vielzahl von, insbesondere vorsterilisierten, Gegenständen, die in einer länglichen Verpackung mit einem oberen Ende und einem unteren Ende in einem länglichen Stapel aufeinandergestapelt angeordnet sind, innerhalb einer pharmazeutischen Anlage, insbesondere innerhalb eines Reinraums, insbesondere innerhalb eines Isolators, mit den Merkmalen des Anspruchs 1 gelöst.

Bei den Gegenständen kann es sich um Petrischalen oder Abklatschproben handeln. Die Verpackung kann in Form eines Beutels oder einer Schlauchbeutelverpackung, insbesondere schlauchartig, ausgebildet sein. Das untere Ende der Verpackung kann als eine untere Lasche der Verpackung ausgebildet sein. Das obere Ende der Verpackung kann als eine obere Lasche der Verpackung ausgebildet sein. Das obere Ende der Verpackung kann einen (oberen) Abschnitt der Verpackung darstellen. Das untere Ende der Verpackung kann einen (unteren) Abschnitt der Verpackung darstellen.

Die Vorrichtung umfasst mindestens einen unteren Anschlag für die Gegenstände, auf den der Stapel der Gegenstände in der Verpackung an einer oder mehreren um den Umfang der Verpackung herum verteilten Stellen aufgelegt werden kann. Der untere Anschlag kann in Form einer Aufnahme bzw. einer Aufnahmeplatte zum Aufnehmen der Verpackung samt den darin angeordneten Gegenständen ausgebildet sein. Die Vorrichtung kann einen oder mehrere untere Anschläge umfassen.

Die Vorrichtung umfasst weiter mindestens eine untere Fixiereinrichtung. Die untere Fixiereinrichtung ist unterhalb des unteren Anschlags angeordnet. Der untere Anschlag umfasst einen, insbesondere zentralen, Durchgang, durch den das untere Ende der Verpackung bis unter den unteren Anschlag hindurchragen kann (wenn die Gegenstände am unteren Anschlag anliegen), sodass das untere Ende der Verpackung durch die innere Fixiereinrichtung erfasst werden kann während die Gegenstände in der Verpackung an dem unteren Anschlag anliegen. Die Vorrichtung kann eine oder mehrere untere Fixiereinrichtungen umfassen.

Der Durchgang kann in Form einer umfänglich geschlossenen Öffnung oder teilweise, bspw. zur Seite hin, offen ausgebildet sein. Die untere Fixiereinrichtung kann ausgebildet sein, um das untere Ende der Verpackung insbesondere klemmend zu fixieren (zu klemmen) bzw. zu greifen.

Die Vorrichtung umfasst weiter mindestens eine obere Fixiereinrichtung. Die obere Fixiereinrichtung ist oberhalb des oberen Anschlags angeordnet. Die obere Fixiereinrichtung ist zum Erfassen des oberen Endes der Verpackung während die Gegenstände in der Verpackung an dem unteren Anschlag anliegen ausgebildet. Die obere Fixiereinrichtung kann ausgebildet sein, um das obere Ende der Verpackung insbesondere klemmend zu fixieren (zu klemmen) bzw. zu greifen. Die obere Fixiereinrichtung kann analog, insbesondere identisch, zur unteren Fixiereinrichtung ausgebildet sein. Die Vorrichtung kann eine oder mehrere obere Fixiereinrichtungen umfassen.

Die Vorrichtung umfasst weiter mindestens eine Schneideinrichtung zum Aufschneiden (bzw. Abschneiden) eines der Enden (des oberen Endes oder des unteren Endes) der Verpackung während die Gegenstände in der Verpackung an dem unteren Anschlag anliegen. Die Vorrichtung kann eine oder mehrere Schneideinrichtungen umfassen.

Die Schneideinrichtung kann mindestens ein horizontal bewegbares Messer aufweisen. Das Messer kann als linear bewegbares Rollmesser ausgeführt sein. Das Messer kann ebenso als ein gerades Messer ausgebildet sein, welches den Schneidvorgang mit einer Rotations- bzw. Schwenkbewegung durchführt.

Die Schneideinrichtung kann oberhalb oder unterhalb des unteren Anschlags angeordnet sein. Die Schneideinrichtung kann zwischen dem unteren Anschlag und der unteren Fixiereinrichtung angeordnet sein. Schneideinrichtung kann ebenso zwischen dem unteren Anschlag und der oberen Fixiereinrichtung angeordnet sein.

Die Fixiereinrichtung (die untere oder die obere), die dem Ende (dem unteren oder dem oberen) der Verpackung angeordnet ist, das der Schneideinrichtung gegenüberliegt während die Gegenstände in der Verpackung an dem unteren Anschlag anliegen, ist als eine Entnahmeeinrichtung ausgebildet. Die Entnahmeeinrichtung ist ausgebildet, um die mittels der Schneideinrichtung geöffnete (aufgeschnittene) Verpackung von dem Stapel der Gegenstände abzuziehen (zu entfernen).

Das untere Ende kann als ein erstes Ende und das obere Ende kann als ein zweites Ende der Verpackung ausgebildet sein. Die untere Fixiereinrichtung kann als eine erste Fixiereinrichtung und die obere Fixiereinrichtung kann als eine zweite Fixiereinrichtung ausgebildet sein. Der untere Anschlag kann als ein erster Anschlag ausgebildet sein.

Die Schneideinrichtung und die untere Fixiereinrichtung können unterhalb des unteren Anschlags und die als Entnahmeeinrichtung ausgebildete obere Fixiereinrichtung kann oberhalb des unteren Anschlags angeordnet sein. So kann das untere Ende (bzw. die untere Lasche) der Verpackung aufgeschnitten bzw. abgeschnitten werden und die aufgeschnittene Verpackung mittels der Entnahmeeinrichtung nach oben, insbesondere in eine der Schwerkraftrichtung entgegen gerichtete Richtung, von den Gegenständen weggezogen (bzw. entfernt) werden.

Ebenso denkbar ist es, dass die Schneideinrichtung und die obere Fixiereinrichtung oberhalb des unteren Anschlags und die als Entnahmeeinrichtung ausgebildete untere Fixiereinrichtung unterhalb des unteren Anschlags angeordnet sein können. So kann das obere Ende (bzw. die obere Lasche) der Verpackung aufgeschnitten bzw. abgeschnitten werden und die aufgeschnittene Verpackung mittels der Entnahmeeinrichtung nach unten von den Gegenständen, insbesondere in Schwerkraftrichtung, weggezogen werden.

Das Platzieren (Positionieren) der Verpackung samt den darin aufgenommenen Gegenständen in der pharmazeutischen Anlage, insbesondre in den Reinraum, insbesondere in den Isolator, kann manuell durch eine Bedienperson oder automatisiert mittels einer Handhabungseinrichtung, (bspw. Roboterarm) umgesetzt werden.

Vorliegend sind die Begriffe wie "unten", "unteres", "unterhalb" bzw. "oben", "oberes", "oberhalb" auf die Schwerkraft bzw. auf die Schwerkraftrichtung bezogen. So ist bspw. die untere Fixiereinrichtung in Bezug auf die Schwerkraftrichtung unterhalb der oberen Fixiereinrichtung angeordnet.

Ein Reinraum im vorliegenden Sinne kann ein Barrieresystem, z. B. RABS (Reduced Access Barrier System), ein Isolator (z. B. aseptischer oder zytotoxischer Isolator) oder auch ein Biosicherheitsschrank (Biosafety cabinet) sein. Ein Reinraum in diesem Sinne kann unter Überdruck stehen, um das Eindringen von Kontaminationen zu verhindern bzw. das Risiko eines Eindringens zu minimieren. Ein Reinraum in diesem Sinne kann alternativ auch unter einem Unterdruck betrieben werden, um das Entweichen etwaiger im Reinraum zu handhabender toxischer oder in sonstiger Weise gefährlicher Stoffe zu verhindern.

Mittels der Vorrichtung kann die Verpackung von den darin aufgenommenen Gegenständen entfernt werden, ohne dass ein manuelles Eingreifen einer Bedienperson während des Entpackens der Gegenstände nötig ist. Der Entpackungsvorgang kann so automatisiert werden. Es kann auf Handschuheingriffe in der pharmazeutischen Anlage und/oder auf einen zur pharmazeutischen Anlage zusätzlichen Isolator (mit Handschuheingriffen) zum Entpacken der Gegenstände verzichtet werden.

Die Vorrichtung kann weiter eine Führung umfassen. Die Führung kann seitlich zu dem Stapel der Gegenstände angeordnet sein, wenn diese in der Verpackung an dem unteren Anschlag anliegen. Die Führung kann ausgebildet sein, um die Gegenstände in ihrer gestapelten Anordnung (bspw. als Stapel) zu halten während die Gegenstände in der Verpackung an dem unteren Anschlag anliegen. Die Führung kann die Verpackung und/oder die Gegenstände seitlich kontaktieren um diese in ihrer gestapelten Anordnung zu halten während die Gegenstände an dem unteren Anschlag anliegen.

Die Führung kann eine Halteeinrichtung umfassen oder als eine Halteeinrichtung ausgebildet sein. Die Halteeinrichtung kann eingerichtet sein, um die Gegenstände in der Verpackung, wenn diese an dem unteren Anschlag anliegen, insbesondere während der Entnahme der aufgeschnittenen Verpackung, an dem unteren Anschlag zu fixieren (zu halten). Die Gegenstände können mittels der Halteeinrichtung (fest-)gehalten werden, so dass diese während des Entnahmevorgangs der aufgeschnittenen Verpackung in ihrer Position bzw. Lage verbleiben, also ihre Position bzw. Lage nicht ändern.

Die Führung kann mindestens eine Welle mit einem oberen Anschlag (bzw. Halteelement) umfassen. Die Führung kann insbesondere drei Wellen mit jeweils einem oberen Anschlag (bzw. Halteelement) für die Gegenstände (insbesondere für den obersten Gegenstand des Stapels der Gegenstände) umfassen. Der obere Anschlag kann als ein zweiter Anschlag ausgebildet sein.

Die Welle kann in einer Basisplatte angeordnet sein. Die Basisplatte kann eine (Aufstell-)Basis für die gesamte Vorrichtung darstellen. Die Basisplatte kann unterhalb des unteren Anschlags angeordnet sein. Die Welle kann sich durch den unteren Anschlag hindurch erstrecken. Der untere Anschlag kann hierfür eine Öffnung aufweisen, durch die sich die Welle hindurch erstreckt. Der untere Anschlag kann mit der Welle, insbesondere drehbar, gekoppelt sein.

Der untere Anschlag kann mittels der Welle mit der Basisplatte gekoppelt bzw. verbunden sein. Der untere Anschlag kann derart mittels der Welle mit der Basisplatte verbunden sein, dass zwischen dem unteren Anschlag und der Basisplatte ein konstanter Abstand (insbesondere in Schwerkraftrichtung) vorliegt. Der untere Anschlag kann parallel zur Basisplatte angeordnet sein.

Der obere Anschlag kann ausgebildet sein, um zwischen einer Fixierstellung und einer Freigabestellung verschwenkt zu werden.

In der Fixierstellung kann der Stapel von Gegenständen zwischen dem unteren Anschlag und dem oberen Anschlag erfasst (gehalten bzw. fixiert) werden. Der untere Anschlag begrenzt insbesondere eine Bewegung der Gegenstände nach unten. Der obere Anschlag begrenzt in der Fixierstellung insbesondere eine Bewegung der Gegenstände nach oben. Der obere Anschlag kann insbesondere in die Fixierstellung überführt werden, indem der obere Anschlag in Richtung zum Stapel von Gegenständen hin geschwenkt wird. In der Fixierstellung kann der Stapel von Gegenständen zwischen dem unteren Anschlag und dem oberen Anschlag angeordnet sein. In der Fixierstellung kann der Stapel von Gegenständen zwischen dem unteren Anschlag und dem oberen Anschlag formschlüssig erfasst (gehalten bzw. fixiert) werden.

In der Freigabestellung kann der Stapel von Gegenständen durch den oberen Anschlag freigegeben werden. In der Freigabestellung kann der Stapel von Gegenständen von oben in die Vorrichtung eingelegt und aus der Vorrichtung entnommen werden. In der Freigabestellung kann der obere Anschlag derart angeordnet sein, dass der Stapel von Gegenständen insbesondere nicht zwischen dem unteren Anschlag und dem oberen Anschlag angeordnet ist. Der obere Anschlag kann insbesondere in die Freigabestellung überführt werden, in dem der obere Anschlag in Richtung vom Stapel von Gegenständen weg geschwenkt wird.

Der obere Anschlag kann drehfest mit der Welle verbunden (bzw. gekoppelt) sein. Der obere Anschlag kann mittels einer Schraube mit der Welle lösbar verbunden sein. Die Welle kann drehbar ausgebildet sein. Die Drehachse der Welle bzw. die Drehachse (Schwenkachse) des oberen Anschlags kann entlang der Schwerkraftrichtung orientiert sein und insbesondere identisch mit der Mittellängsachse der Welle sein. Der obere Anschlag kann insbesondere durch eine Drehung der Welle von der Freigabestellung in die Fixierstellung und umgekehrt überführt werden.

Der obere Anschlag kann als ein federndes Element (bspw. aus einem Kunststoff) ausgebildet sein. Der obere Anschlag kann als ein federndes Blech (Metallblech) ausgebildet sein. Der obere Anschlag kann beabstandet zum obersten Gegenstand und/oder oberhalb des obersten Gegenstands des Stapels von Gegenständen angeordnet sein, wenn diese an dem unteren Anschlag anliegen.

Der obere Anschlag kann einen abgeschrägten Abschnitt aufweisen. Der abgeschrägte Abschnitt des oberen Anschlags kann insbesondere in der Fixierstellung oberhalb des obersten Gegenstands des Stapels von Gegenständen angeordnet sein. Aufgrund des abgeschrägten Abschnitts kann die Verpackung während des Entfernens mittels der Entnahmeeinrichtung leichter an dem oberen Anschlag entlang gleiten. Damit kann ein Verkannten und/oder ein Reißen der Verpackung während des Entfernens mittels der Entnahmeeinrichtung vermieden werden.

Die untere Fixiereinrichtung kann zwei Klemmbacken zum klemmenden Fixieren (Greifen) des unteren Endes der Verpackung aufweisen. Die obere Fixiereinrichtung kann zwei Klemmbacken zum klemmenden Fixieren (Greifen) des oberen Endes der Verpackung aufweisen. Die Schneideinrichtung bzw. deren Messer kann eingerichtet sein, um entlang einer Kante (oder entlang einer Oberfläche) der Klemmbacken der unteren oder der oberen Fixiereinrichtung entlang zu schneiden.

Die Vorrichtung kann mindestens einen Abfallbehälter zur Aufnahme der aufgeschnittenen Verpackung, des oberen Endes der Verpackung, des unteren Endes der Verpackung und/oder eines eventuell in der Verpackung vorhandenen Trockenmittelbeutels aufweisen. Der Trockenmittelbeutel kann nach dem Entfernen der Verpackung von den Gegenständen entweder selbstständig, bspw. aufgrund der Schwerkraft, in den Abfallbehälter fallen. Die Vorrichtung kann einen oder mehrere Abfallbehälter umfassen.

Die Vorrichtung kann eine Handhabungseinrichtung (bspw. Roboterarm) umfassen, mittels der die aufgeschnittene Verpackung, das obere Ende der Verpackung, das untere Ende der Verpackung und/oder der eventuell in der Verpackung vorhandene Trockenmittelbeutel in den Abfallbehälter befördert werden können.

Die Vorrichtung kann mindestens eine optische Erfassungseinrichtung zu Überwachung der Position und/oder der Lage der Gegenstände umfassen. Die optische Erfassungseinrichtung kann eine Kamera umfassen oder als eine Kamera ausgebildet sein. Die optische Erfassungseinrichtung kann insbesondere während die Gegenstände in der Verpackung an dem unteren Anschlag anliegen die Position und/oder die Lage der Gegenstände überwachen. Hierdurch kann bspw. ein Verrutschen der Gegenstände erfasst und bspw. ein Alarmsignal (optisch und/oder akustisch) erzeugt und ausgegeben werden. Die Vorrichtung kann eine oder mehrere optische Erfassungseinrichtungen umfassen.

Die obige Aufgabe wird weiter durch ein Set mit den Merkmalen des Anspruchs 8 gelöst.

Das Set umfasst mindestens eine Vorrichtung gemäß obiger Ausführungen und mindestens eine Verpackung. Bei der Verpackung handelt es sich insbesondere um eine Verpackung gemäß obiger Ausführungen. Die Verpackung umfasst einen länglichen Stapel aufeinandergestapelter Gegenstände.

Die Verpackung kann länglich, insbesondere schlauchartig, ausgebildet sein. Die Verpackung kann ein oberes (abstehendes) Ende ein unteres (abstehendes) Ende aufweisen. Das obere Ende und/oder das untere Ende der Verpackung können jeweils mittels einer Fixiereinrichtung erfassbar (insbesondere klemmend fixierbar bzw. greifbar) ausgebildet sein.

Die Verpackung kann in Form eines Beutels oder einer Schlauchbeutelverpackung, insbesondere schlauchartig, ausgebildet sein.

Hinsichtlich der mit dem Set erzielbaren Vorteile wird auf die diesbezüglichen Ausführungen zur Vorrichtung verwiesen. Zur weiteren Ausgestaltung des Sets können die im Zusammenhang mit der Vorrichtung beschriebenen und/oder die nachfolgend noch erläuterten Maßnahmen dienen.

Die obige Aufgabe wird weiter durch eine pharmazeutische Anlage, insbesondere durch einen Reinraum, insbesondere durch einen Isolator, mit den Merkmalen des Anspruchs 10 gelöst.

Die pharmazeutische Anlage umfasst mindestens eine Vorrichtung gemäß obiger Ausführungen und mindestens ein Set gemäß obiger Ausführungen.

Hinsichtlich der mit der pharmazeutischen Anlage erzielbaren Vorteile wird auf die diesbezüglichen Ausführungen zur Vorrichtung bzw. Set verwiesen. Zur weiteren Ausgestaltung der pharmazeutischen Anlage können die im Zusammenhang mit der Vorrichtung bzw. mit dem Set beschriebenen und/oder die nachfolgend noch erläuterten Maßnahmen dienen.

Die pharmazeutische Anlage kann eine Belüftungseinrichtung aufweisen. Die Belüftungseinrichtung kann innerhalb der pharmazeutischen Anlage angeordnet sein. Es ist ebenso denkbar, dass die Belüftungseinrichtung zumindest teilweise außerhalb der pharmazeutischen Anlage angeordnet sein kann.

Die Belüftungseinrichtung kann ausgebildet sein, um einen, insbesondere laminaren, Luftstrom zu erzeugen, der auf die Vorrichtung und insbesondere in Schwerkraftrichtung gerichtet ist. Mit anderen Worten, der durch die Belüftungseinrichtung erzeugte, insbesondere laminare, Luftstrom kann von oben auf die Vorrichtung gerichtet werden. So können Partikel, die bspw. während des Aufschneidens der Verpackung entstehen von der Verpackung abgeblasen werden, sodass diese nicht mit den Gegenständen in Kontakt kommen.

Die obige Aufgabe wird weiter durch ein Verfahren zum Entpacken einer Vielzahl von, insbesondere vorsterilisierten, Gegenständen, die in einer länglichen Verpackung mit einem oberen Ende und einem unteren Ende in einem länglichen Stapel aufeinandergestapelt angeordnet sind, innerhalb einer pharmazeutischen Anlage, insbesondere innerhalb eines Reinraums, insbesondere innerhalb eines Isolators, mit den Merkmalen des Anspruchs 12 gelöst.

Bei den Gegenständen kann es sich um Petrischalen oder Abklatschproben handeln. Die Verpackung kann in Form eines Beutels oder einer Schlauchbeutelverpackung, insbesondere schlauchartig, ausgebildet sein. Das untere Ende der Verpackung kann als eine untere Lasche der Verpackung ausgebildet sein. Das obere Ende der Verpackung kann als eine obere Lasche der Verpackung ausgebildet sein. Das obere Ende der Verpackung kann einen (oberen) Abschnitt der Verpackung darstellen. Es untere Ende der Verpackung kann einen (unteren) Abschnitt der Verpackung darstellen.

Das Verfahren umfasst die Schritte:
Bereitstellen mindestens eines unteren Anschlags für die Gegenstände, auf den der Stapel der Gegenstände in der Verpackung an einer oder mehreren um den Umfang der Verpackung herum verteilten Stellen aufgelegt werden kann.

Auflegen (Platzieren) des Stapels der Gegenstände in der Verpackung an den unteren Anschlag. Dies kann manuell oder automatisiert durch eine Handhabungseinrichtung, bspw. Roboter, umgesetzt werden

Erfassen (Fixieren), insbesondere Klemmen (Greifen), des unteren Endes der Verpackung.

Erfassen (Fixieren), insbesondere Klemmen (Greifen), des oberen Endes der Verpackung.

Aufschneiden der Verpackung, insbesondere Abschneiden des unteren Endes oder des oberen Endes der Verpackung.

Abziehen (Entfernen bzw. Entnehmen) der aufgeschnittenen Verpackung von dem Stapel der Gegenstände.

Das Abziehen der aufgeschnittenen Verpackung kann entlang der Schwerkraftrichtung nach oben oder nach unten geschehen. Mit anderen Worten, das Abziehen der aufgeschnittenen Verpackung kann in Schwerkraftrichtung, oder gegen die Schwerkraftrichtung umgesetzt werden.

Das Verfahren kann weiter die Schritte umfassen:
Bereitstellen mindestens eines oberen Anschlags für die Gegenstände.

Erfassen (bzw. Halten) des Stapels der Gegenstände zwischen dem unteren Anschlag und dem oberen Anschlag während des Abziehens der aufgeschnittenen Verpackung von dem Stapel der Gegenstände.

Das Verfahren kann weiter den Schritt umfassen:
Dekontaminieren der Verpackung (von außen), insbesondere mittels Wasserstoffperoxid (H2O2). Dieser Dekontaminationsschritt kann zeitlich insbesondere vor dem Erfassen des unteren Endes der Verpackung, vor dem Erfassen des oberen Endes der Verpackung und/oder vor dem Aufschneiden der Verpackung durchgeführt werden.

Die Lage und/oder die Position der Gegenstände, insbesondere während des Abziehens der aufgeschnittenen Verpackung von dem Stapel der Gegenstände, kann überwacht werden. Dies kann insbesondere mittels mindestens einer optischen Erfassungseinrichtung, insbesondere mittels mindestens einer Kamera, umgesetzt werden.

Das Verfahren kann weiter den Schritt umfassen:
Platzieren (Positionieren) der aufgeschnittenen Verpackung, des unteren Endes der Verpackung, des oberen Endes der Verpackung und/oder eines eventuell in der Verpackung vorhandenen Trockenmittelbeutels, insbesondere mittels einer Handhabungseinrichtung, in mindestens einen Abfallbehälter.

Zur Durchführung des Verfahrens kann eine Vorrichtung gemäß obiger Ausführungen, ein Set gemäß obiger Ausführungen oder eine pharmazeutische Anlage gemäß obiger Ausführungen benutzt werden.

Hinsichtlich der mit dem Verfahren erzielbaren Vorteile wird auf die diesbezüglichen Ausführungen zur Vorrichtung, zum Set oder zur pharmazeutischen Anlage verwiesen. Zur weiteren Ausgestaltung des Verfahrens können die im Zusammenhang mit der Vorrichtung, dem Set oder der pharmazeutischen Anlage beschriebenen und/oder die nachfolgend noch erläuterten Maßnahmen dienen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 eine perspektivische Ansicht einer Vielzahl von Gegenständen in einer Verpackung;
Fig. 2 eine perspektivische Ansicht auf eine Vorrichtung;
Fig. 3 eine Seitenansicht der Vorrichtung gemäß Figur 2 und
Fig. 4 eine schematische Seitenansicht einer pharmazeutischen Anlage.

In der nachfolgenden Beschreibung sowie in den Figuren tragen sich entsprechende Bauteile und Elemente gleiche Bezugszeichen. Der besseren Übersichtlichkeit wegen sind nicht in allen Figuren sämtliche Bezugszeichen wiedergegeben.

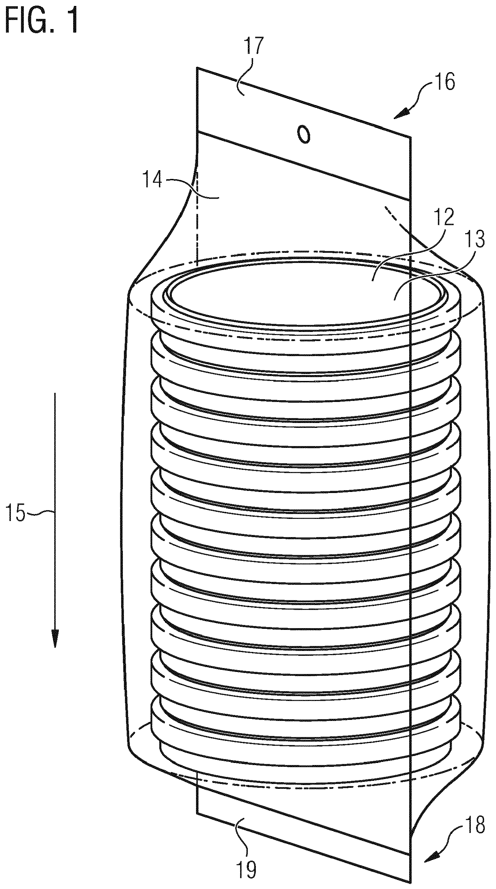

Figur 1 zeigt eine perspektivische Ansicht einer Vielzahl von Gegenständen 12 in einer Verpackung 14. Die Verpackung 14 ist vorliegend als eine Schlauchbeutelverpackung ausgebildet und weist ein oberes Ende 16 und ein unteres Ende 18 auf. Das obere Ende 16 ist als eine obere Lasche 17, die von der schlauchförmigen Verpackung 14 nach oben abragt, ausgebildet. Das untere Ende 18 ist als eine untere Lasche 19, die von der schlauchförmigen Verpackung 14 nach unten abragt, ausgebildet.

Bei den Gegenständen 12 handelt es sich vorliegend um zehn in einem Stapel aufeinandergestapelter Petrischalen 13, die vorsterilisiert in der Verpackung 14 angeordnet sind.

Die Begriffe wie "unten", "unteres", "unterhalb" bzw. "oben", "oberes", "oberhalb" sind vorliegend auf die Schwerkraft bzw. auf die Schwerkraftrichtung 15 bezogen. Die Schwerkraftrichtung 15 ist in den Figuren 1 bis 4 jeweils mittels eines Pfeils angedeutet.

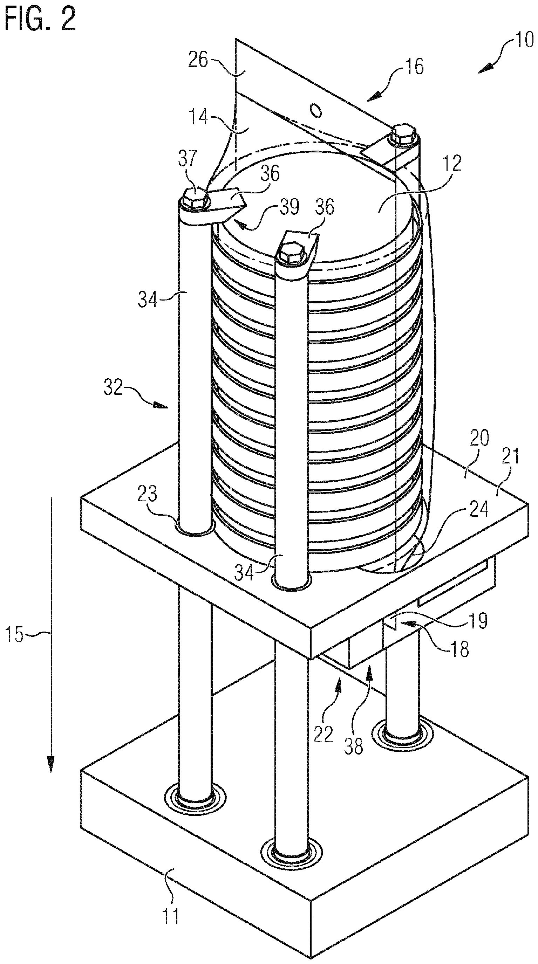

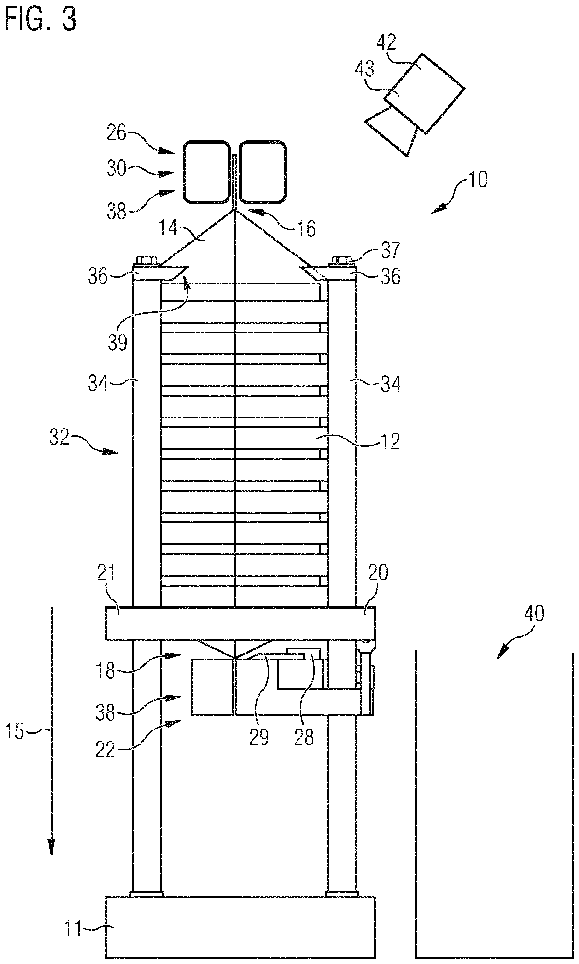

Figur 2 zeigt eine perspektivische Ansicht auf eine Vorrichtung 10 und Figur 3 zeigt eine Seitenansicht der Vorrichtung 10 gemäß Figur 2.

Die Vorrichtung 10 weist eine Basisplatte 11 auf, die zum Aufstellen der Vorrichtung 10 dient. Auf der Basisplatte 11 sind drei Wellen 34 angeordnet, die sich von der Basisplatte 11 senkrecht nach oben erstrecken. Die drei Wellen 34 sind um ihre jeweilige Mittellängsachse drehbar ausgebildet. Mit anderen Worten, die drei Wellen 34 sind jeweils drehbar mit der Basisplatte 11 gekoppelt (verbunden).

Die Vorrichtung 10 weist einen unteren Anschlag 20 für die Gegenstände 12 auf. Der untere Anschlag 20 ist vorliegend in Form einer Aufnahmeplatte 21 ausgebildet. Der untere Anschlag 20 ist oberhalb der Basisplatte 11 angeordnet.

Die drei Wellen 34 sind vorliegend jeweils drehbar mit dem unteren Anschlag 20 gekoppelt (verbunden). Mit anderen Worten, die drei Wellen 34 können jeweils relativ zum unteren Anschlag 20 gedreht werden. Die drei Wellen 34 erstrecken sich durch den unteren Anschlag 20 hindurch. Der untere Anschlag 20 weist hierfür jeweils eine Öffnung 23 (also vorliegend drei Öffnungen 23) auf.

Der untere Anschlag 20 kann mittels der drei Wellen 34 mit der Basisplatte 11 gekoppelt (verbunden) sein. Die drei Wellen 34 können in dem unteren Anschlag 20 drehbar gelagert sein. Dies kann insbesondere mittels in den Öffnungen 23 angeordneter Lager (nicht dargestellt) umgesetzt werden. Der untere Anschlag 20 kann über mindestens ein Fixierelement (nicht dargestellt) fest mit der Basisplatte 11 verbunden sein.

Die drei Wellen 34 können sich so durch den unteren Anschlag 20 hindurch erstrecken, dass sie den untern Anschlag 20 nicht kontaktieren. Hierzu können die Öffnungen 23 jeweils einen Durchmesser aufweisen, der größer ist, als jeweils der Durchmesser der drei Wellen 34.

In dem vorliegend dargestellten Zustand ist der Stapel der Gegenstände 12 in der Verpackung 14 auf den unteren Anschlag 20 aufgelegt. Der untere Anschlag 20 weist einen zentralen Durchgang 24 auf, der vorliegend in Form einer Durchgangsöffnung ausgebildet ist. Das untere Ende 18 der Verpackung 14 erstreckt sich durch den Durchgang 24 bis unter den unteren Anschlag 20 hindurch.

Die Vorrichtung weist eine untere Fixiereinrichtung 22 auf. Die untere Fixiereinrichtung 22 ist unterhalb des unteren Anschlags 20 angeordnet. Die untere Fixiereinrichtung 22 ist zum Fixieren des unteren Endes 18 der Verpackung 14, welches aus dem Durchgang 24 bis unter den unteren Anschlag 20 herausragt, ausgebildet. Die untere Fixiereinrichtung 22 weist hierfür zwei Klemmbacken 38 auf. Das untere Ende 18 der Verpackung 14 kann so unter dem unteren Anschlag 20 mittels der beiden Klemmbacken 38 der unteren Fixiereinrichtung 22 mittels Klemmung fixiert bzw. gegriffen werden.

Die Vorrichtung 10 weist weiter eine obere Fixiereinrichtung 26 zum Erfassen des oberen Endes 16 der Verpackung 14 auf. Der besseren Übersicht wegen ist die obere Fixiereinrichtung 26 in Figur 2 nicht dargestellt und in Figur 3 lediglich schematisch angedeutet.

Die obere Fixiereinrichtung 26 ist oberhalb des unteren Anschlags 20 angeordnet. Die obere Fixiereinrichtung 26 ist zum Fixieren des oberen Endes 16 der Verpackung 14 ausgebildet während die Gegenstände 12 in der Verpackung 14 an dem unteren Anschlag 20 anliegen. Die obere Fixiereinrichtung 26 weist hierfür zwei Klemmbacken 38 auf, die in Figur 2 nicht dargestellt und in Figur 3 lediglich schematisch angedeutet sind. Das obere Ende 16 der Verpackung 14 kann so (oberhalb des unteren Anschlags 20) mittels der beiden Klemmbacken 38 der oberen Fixiereinrichtung 26 mittels Klemmung fixiert bzw. gegriffen werden.

Die Vorrichtung 10 weist vorliegend eine Schneideinrichtung 28 zum Aufschneiden des unteren Endes 18 der Verpackung 14 auf während die Gegenstände 12 in der Verpackung 14 an dem unteren Anschlag 20 anliegen. Die Schneideinrichtung 28 ist vorliegend zum Abschneiden der unteren Lasche 19 der Verpackung 14 während die Gegenstände 12 in der Verpackung 14 an dem unteren Anschlag 20 anliegen eingerichtet. Entsprechend ist die Schneideinrichtung 28 zwischen der ersten Fixiereinrichtung 22 und dem unteren Anschlag 20 angeordnet.

Die Schneideinrichtung 28 weist ein senkrecht zur Schwerkraftrichtung 15 (also waagerecht) bewegbares Messer 29 auf. Die Schneideinrichtung 28 bzw. das Messer 29 der Schneideinrichtung 28 ist vorliegend derart ausgebildet und angeordnet, dass das Messer 29 während eines Schneidvorgangs entlang der oberen Kante bzw. einer Oberfläche der beiden Klemmbacken 38 der unteren Fixiereinrichtungen 22 entlang gleitet. Hierdurch kann die Schneidwirkung optimiert bzw. verstärkt werden.

Die obere Fixiereinrichtung 26 ist vorliegend als eine Entnahmeeinrichtung 30 ausgebildet. Aus Gründen der Übersicht ist die Entnahmeeinrichtung 30 in Figur 2 nicht dargestellt und in Figur 3 lediglich schematisch angedeutet. Die Entnahmeeinrichtung 30 ist ausgebildet, um die mittels der Schneideinrichtung 28 geöffnete (aufgeschnittene) Verpackung 14 von dem Stapel der Gegenstände 12 nach oben (gegen die Schwerkraftrichtung 15) abzuziehen. Die Entnahmeeinrichtung 30 ist hierfür relativ zum unteren Anschlag 20, insbesondere entlang der Schwerkraftrichtung 15, beweglich ausgebildet.

Die drei Wellen 34 erstrecken sich von der Basisplatte 11 durch den unteren Anschlag 20 bis über den Stapel der Gegenstände 12 nach oben. Die drei Wellen 34 bilden vorliegend eine Führung 32 für den Stapel der Gegenstände 12, wenn diese an dem unteren Anschlag 20 aufliegen. Mittels der drei Wellen 34 kann insbesondere ein seitliches Verrutschen (also quer zur Schwerkraftrichtung 15) verhindert werden.

Jede der drei Wellen 34 weist an ihrem der Basisplatte 11 abgewandtem Ende einen oberen Anschlag 36 auf. Die drei oberen Anschläge 36 sind jeweils mittels einer Schraube 37 drehfest mit der jeweiligen Welle 34 (lösbar) verbunden. Die Wellen 34 sind drehbar um ihre jeweilige Mittellängsachse ausgebildet. Durch eine Drehung der jeweiligen Welle 34 kann der jeweilige obere Anschlag 36 quer zur Schwerkraftrichtung 15 (also innerhalb einer waagerechten Ebene) verschwenkt werden.

Damit können die oberen drei Anschläge 36 in eine Freigabestellung geschwenkt werden, in der der Stapel von Gegenständen 12 in der Verpackung 14 entlang der Führung 32 auf den unteren Anschlag 20 aufgelegt werden kann. In der Freigabestellung sind die drei oberen Anschläge 36 von dem Stapel von Gegenständen 12 weg gerichtet.

Die oberen drei Anschläge 36 können in eine Fixierstellung geschwenkt werden. Die Fixierstellung ist in den Figuren 2 und 3 dargestellt. In der Fixierstellung sind die drei oberen Anschläge 36 zu dem Stapel von Gegenständen 12 hingerichtet. In der Fixierstellung bildet der untere Anschlag 20, die drei oberen Anschläge 36 und die drei Wellen 34 einen Formschluss für den Stapel von Gegenständen 12. Der Stapel von Gegenständen 12 wird mittels des unteren Anschlags 20 und der drei oberen Anschläge 36, wenn diese in der Fixierstellung angeordnet sind, zwischen dem unteren Anschlag 20 und der drei oberen Anschläge 36 (fixiert) festgehalten.

Die drei Wellen 34 sind alle gleich lang, sodass die drei oberen Anschläge 36 auf derselben Höhe (innerhalb derselben waagerechten Ebene) angeordnet sind. Vorliegend sind die drei oberen Anschläge 36 beabstandet zum obersten Gegenstand 12 des Stapels von Gegenständen 12 in der Verpackung 14 angeordnet. Beim Entfernen der Verpackung 14 nach oben, gleitet diese aufgrund des Abstands zwischen dem obersten Gegenstand 12 des Stapels von Gegenständen 12 und den drei oberen Anschlägen 36 zwischen diesen hindurch.

Die drei oberen Anschläge 36 weisen jeweils einen abgeschrägten Abschnitt 39 auf, der in der Fixierstellung oberhalb des obersten Gegenstands 12 des Stapels von Gegenständen 12 in der Verpackung 14 angeordnet ist. Die abgeschrägten Abschnitte 39 der drei oberen Anschläge 36 erleichtern das Gleiten der Verpackung 14 während des Entfernens der Verpackung 14 nach oben.

So kann die unterhalb des unteren Anschlags 20 mittels der Schneideinrichtung 28 aufgeschnittene Verpackung 14 mittels der Entnahmeeinrichtung 30 nach oben von dem Stapel von Gegenständen 12 abgezogen (entfernt) werden. Dabei verhindern die drei oberen Anschläge 36, dass die Gegenstände 12 mit der abgezogenen Verpackung 14 mitgezogen und bspw. vom Stapel von Gegenständen 12 abheben. Mit anderen Worten, die drei oberen Anschläge 36 halten den Stapel von Gegenständen 12 in seiner Form auf dem unteren Anschlag 20.

Die Vorrichtung 10 weist einen Abfallbehälter 40 auf. Der Abfallbehälter 40 ist aus Gründen der Übersicht in Figur 2 nicht dargestellt und in Figur 3 lediglich schematisch angedeutet. Der Abfallbehälter 40 kann zur Aufnahme der aufgeschnittenen Verpackung 14, des unteren Endes 18 der Verpackung 14 und/oder eines eventuell in der Verpackung 14 vorhandenen Trockenmittelbeutels (nicht dargestellt) dienen.

Die Vorrichtung 10 weist weiter eine optische Erfassungseinrichtung 42 auf, die vorliegend in Form einer Kamera 43 ausgebildet ist. Die Erfassungseinrichtung 42 bzw. die Kamera 43 ist aus Gründen der Übersicht in Figur 2 nicht dargestellt und in Figur 3 lediglich schematisch angedeutet.

Mittels der optischen Erfassungseinrichtung 42 kann die Position bzw. die Lage des Stapels von Gegenständen 12 überwacht bzw. kontrolliert werden, insbesondere, wenn diese auf dem unteren Anschlag 20 aufliegen.

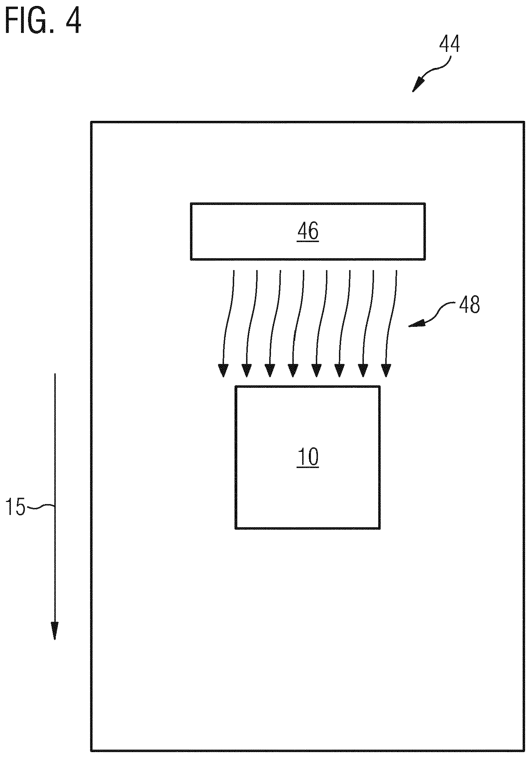

Figur 4 zeigt eine schematische Seitenansicht einer pharmazeutischen Anlage 44.

Die pharmazeutische Anlage 44 umfasst die Vorrichtung 10, die innerhalb der pharmazeutischen Anlage 44 angeordnet ist. Die pharmazeutische Anlage 44 weist eine Belüftungseinrichtung 46 auf, die oberhalb der Vorrichtung 10 angeordnet ist. Die Belüftungseinrichtung 46 ist vorliegend innerhalb der pharmazeutischen Anlage 44 angeordnet.

Die Belüftungseinrichtung 46 ist eingerichtet, um einen laminaren Luftstrom 48 zu erzeugen. Der laminaren Luftstrom 48 ist in Figur 4 schematisch mittels Pfeilen angedeutet. Der Luftstrom 48 ist somit entlang der Schwerkraftrichtung 15 und auf die Vorrichtung 10 gerichtet.

Durch den Luftstrom 48 können Partikel, die während des Aufschneidens der Verpackung 14 entstehen können, von dieser abgeblasen werden. So kann verhindert werden, dass Partikel, die während des Aufschneidens der Verpackung 14 entstehen können, in Kontakt mit den Gegenständen 12 geraten und diese so kontaminieren.

## Patentansprüche

1. Vorrichtung (10) zum Entpacken einer Vielzahl von, insbesondere vorsterilisierten, Gegenständen (12), die in einer länglichen Verpackung (14) mit einem oberen Ende (16) und einem unteren Ende (18) in einem länglichen Stapel aufeinandergestapelt angeordnet sind, innerhalb einer pharmazeutischen Anlage, insbesondere innerhalb eines Reinraums, insbesondere innerhalb eines Isolators, wobei die Vorrichtung (10) umfasst:
- mindestens einen unteren Anschlag (20) für die Gegenstände (12), auf den der Stapel der Gegenstände (12) in der Verpackung (14) an einer oder mehreren um den Umfang der Verpackung (14) herum verteilten Stellen aufgelegt werden kann,
- mindestens eine unterhalb des unteren Anschlags (20) angeordnete untere Fixiereinrichtung (22),
wobei der untere Anschlag (20) einen, insbesondere zentralen, Durchgang (24) aufweist, durch den das untere Ende (18) der Verpackung (14) bis unter den unteren Anschlag (20) hindurch ragen kann, so dass das untere Ende (18) der Verpackung (14) durch die untere Fixiereinrichtung (22) erfasst werden kann während die Gegenstände (12) in der Verpackung (14) an dem unteren Anschlag (20) anliegen,
- mindestens eine oberhalb des oberen Anschlags (20) angeordnete obere Fixiereinrichtung (26) zum Erfassen des oberen Endes (16) der Verpackung (14) während die Gegenstände (12) in der Verpackung (14) an dem unteren Anschlag (20) anliegen,
- mindestens eine Schneideinrichtung (28) zum Aufschneiden eines der Enden (16, 18) der Verpackung (14) während die Gegenstände (12) in der Verpackung (14) an dem unteren Anschlag (20) anliegen,
wobei während die Gegenstände (12) in der Verpackung (14) an dem unteren Anschlag (20) anliegen die Fixiereinrichtung (22, 26), die an dem Ende (16, 18) der Verpackung (14) angeordnet ist, das der Schneideinrichtung (28) gegenüberliegt, als eine Entnahmeeinrichtung (30) ausgebildet ist, wobei die Entnahmeeinrichtung (30) ausgebildet ist, um die mittels der Schneideinrichtung (28) geöffnete Verpackung (14) von dem Stapel der Gegenstände (12) abzuziehen.

2. Vorrichtung (10) nach Anspruch 1, **dadurch gekennzeichnet, dass** die Vorrichtung (10) weiter eine Führung (32) umfasst, wobei die Führung (32) seitlich zu dem Stapel der Gegenstände (12) angeordnet ist, wenn diese an dem unteren Anschlag (20) anliegen, wobei die Führung (32) ausgebildet ist, um die Gegenstände (12) in ihrer gestapelten Anordnung zu halten während die Gegenstände (12) an dem unteren Anschlag (20) anliegen.

3. Vorrichtung (10) nach dem voranstehenden Anspruch, **dadurch gekennzeichnet, dass** die Führung (32) mindestens eine Welle (34) mit einem oberen Anschlag (36), insbesondere drei Wellen (34) mit jeweils einem oberen Anschlag (36), für die Gegenstände (12) umfasst, wobei der obere Anschlag (36) zwischen einer Fixierstellung, in der der Stapel von Gegenständen (12) zwischen dem unteren Anschlag (20) und dem oberen Anschlag (36) erfasst werden kann, und einer Freigabestellung, in der der Stapel von Gegenständen (12) durch den oberen Anschlag (36) freigegeben werden kann, schwenkbar ausgebildet ist.

4. Vorrichtung (10) nach dem voranstehenden Anspruch, **dadurch gekennzeichnet, dass** der obere Anschlag (36) als ein federndes Element, insbesondere als federndes Blech, ausgebildet und/oder beabstandet zum obersten Gegenstand (12) des Stapels von Gegenständen (12) angeordnet ist, wenn diese an dem unteren Anschlag (20) anliegen.

5. Vorrichtung (10) nach einem der voranstehenden Ansprüche, **dadurch gekennzeichnet, dass** die untere Fixiereinrichtung (22) zwei Klemmbacken (38) zum klemmenden Fixieren des unteren Endes (18) der Verpackung (14) und/oder die obere Fixiereinrichtung (26) zwei Klemmbacken (34) zum klemmenden Fixieren des oberen Endes (16) der Verpackung (14) aufweist.

6. Vorrichtung (10) nach einem der voranstehenden Ansprüche, **dadurch gekennzeichnet, dass** die Vorrichtung (10) mindestens einen Abfallbehälter (40) zur Aufnahme der aufgeschnittenen Verpackung (14), des oberen Endes (16) der Verpackung (14), des unteren Endes (18) der Verpackung (14) und/oder eines eventuell in der Verpackung (14) vorhandenen Trockenmittelbeutels aufweist.

7. Vorrichtung (10) nach einem der voranstehenden Ansprüche, **dadurch gekennzeichnet, dass** die Vorrichtung (10) mindestens eine optische Erfassungseinrichtung (42), insbesondere mindestens eine Kamera, zur Überwachung der Position und/oder der Lage der Gegenstände (12), insbesondere während die Gegenstände (12) in der Verpackung (14) an dem unteren Anschlag (20) anliegen, umfasst.

8. Set umfassend mindestens eine Vorrichtung (10) nach einem der voranstehenden Ansprüche und mindestens eine Verpackung (14), wobei die Verpackung (14) einen länglichen Stapel aufeinandergestapelter Gegenstände (12) innerhalb der Verpackung (14) umfasst.

9. Set nach dem voranstehenden Anspruch, **dadurch gekennzeichnet, dass** die Verpackung (14) länglich, insbesondere schlauchartig, ausgebildet ist, wobei die Verpackung (14) ein oberes Ende (16) und ein unteres Ende (18) aufweist, wobei das obere Ende (16) und/oder das untere Ende (18) der Verpackung (14) jeweils mittels einer Fixiereinrichtung (22, 26) erfassbar ausgebildet sind.

10. Pharmazeutische Anlage (44), insbesondere Reinraum, insbesondere Isolator, mit mindestens einer Vorrichtung (10) nach einem der Ansprüche 1 bis 7 oder mit mindestens einem Set nach Anspruch 8 oder 9.

11. Pharmazeutische Anlage (44) nach dem voranstehenden Anspruch, **dadurch gekennzeichnet, dass** die pharmazeutische Anlage (44) eine Belüftungseinrichtung (46) aufweist, die einen, insbesondere laminaren, Luftstrom erzeugt, der auf die Vorrichtung (10) und insbesondere in Schwerkraftrichtung (15) gerichtet ist.

12. Verfahren zum Entpacken einer Vielzahl von, insbesondere vorsterilisierten, Gegenständen (12), die in einer länglichen Verpackung (14) mit einem oberen Ende (16) und einem unteren Ende (18) in einem länglichen Stapel aufeinandergestapelt angeordnet sind, innerhalb einer pharmazeutischen Anlage, insbesondere innerhalb eines Reinraums, insbesondere innerhalb eines Isolators, wobei das Verfahren die Schritte umfasst:
- Bereitstellen mindestens eines unteren Anschlags (20) für die Gegenstände (12), auf den der Stapel der Gegenstände (12) in der Verpackung (14) an einer oder mehreren um den Umfang der Verpackung (14) herum verteilten Stellen aufgelegt werden kann,
- Auflegen des Stapels der Gegenstände (12) in der Verpackung (14) an dem unteren Anschlag (20),
- Erfassen, insbesondere Klemmen, des unteren Endes (18) der Verpackung (14),
- Erfassen, insbesondere Klemmen, des oberen Endes (16) der Verpackung (14),
- Aufschneiden der Verpackung (14), insbesondere Abschneiden des unteren Endes (18) oder des oberen Endes (16) der Verpackung,
- Abziehen der aufgeschnittenen Verpackung (14) von dem Stapel der Gegenstände (12).

13. Verfahren nach Anspruch 12, **dadurch gekennzeichnet, dass** das Verfahren weiter die Schritte umfasst:
- Bereitstellen mindestens eines oberen Anschlags (36) für die Gegenstände (12),
- Erfassen des Stapels der Gegenstände (12) zwischen dem unteren Anschlag (20) und dem oberen Anschlag (36) während des Abziehens der aufgeschnittenen Verpackung (14) von dem Stapel der Gegenstände (12).

14. Verfahren nach Anspruch 12 oder 13, durch gekennzeichnet, dass das Verfahren den Schritt umfasst:
- Dekontaminieren der Verpackung (14), insbesondere mittels Wasserstoffperoxid, wobei dieser Dekontaminationsschritt insbesondere vor dem Erfassen des unteren Endes (18) der Verpackung (14), vor dem Erfassen des oberen Endes (16) der Verpackung (14) und/oder vor dem Aufschneiden der Verpackung (14) durchgeführt wird.

15. Verfahren nach einem der Ansprüche 12 bis 14, **dadurch gekennzeichnet, dass** die Lage und/oder die Position der Gegenstände (12), insbesondere während des Abziehens der aufgeschnittenen Verpackung (14) von dem Stapel der Gegenstände (12), insbesondere mittels mindestens einer optischen Erfassungseinrichtung (42), überwacht wird.

16. Verfahren nach einem der Ansprüche 12 bis 15, **dadurch gekennzeichnet, dass** das Verfahren den Schritt umfasst:
- Platzieren der aufgeschnittenen Verpackung (14), des unteren Endes (18) der Verpackung (14), des oberen Endes (16) der Verpackung (14) und/oder eines eventuell in der Verpackung (14) vorhandenen Trockenmittelbeutels in mindestens einen Abfallbehälter (40).

17. Verfahren nach einem der Ansprüche 12 bis 16, **dadurch gekennzeichnet, dass** zur Durchführung des Verfahrens eine Vorrichtung (10) nach einem der Ansprüche 1 bis 7, ein Set nach Anspruch 8 oder 9 oder eine pharmazeutische Anlage nach Anspruch 10 oder 11 benutzt wird.
